Europäisches Patentamt

European Patent Office

Office européen des brevets

(19)

(11) Publication number: **0 231 100**
A2

(12) # EUROPEAN PATENT APPLICATION

(21) Application number: **87300526.8**

(22) Date of filing: **21.01.87**

(51) Int. Cl.⁴: **C 02 F 1/46**
C 02 F 1/24

(30) Priority: **21.01.86 AU 4293/86**

(43) Date of publication of application:
**05.08.87 Bulletin 87/32**

(84) Designated Contracting States:
**AT BE CH DE ES FR GB GR IT LI LU NL SE**

(71) Applicant: **Murrell, Wilfred Anthony**
**Wilga Farm**
**Hillston New South Wales 2675 (AU)**

(72) Inventor: **Murrell, Wilfred Anthony**
**Wilga Farm**
**Hillston New South Wales 2675 (AU)**

(74) Representative: **Weitzel, David Stanley**
**4 Rectory Road**
**London E17 3BQ (GB)**

(54) Water cleaning system.

(57) A method and apparatus for treating water contained in a tank to remove contaminants by passing a current through at least two electrodes of a plurality of electrodes contained within the tank, or alternatively through one electrode and the tank to cause at least some of the contaminants to rise and be removed from the surface of the water. Preferably the electrodes and tank are made of aluminium.

EP 0 231 100 A2

**Description**

WATER CLEANING SYSTEM

This invention relates to the treatment of contaminated water for domestic and other uses.

Many city and town water supplies contain impurities and some are turbid. Waters taken from irrigation channels, farm dams and directly from rivers are often unsatisfactory for domestic and other uses until treated to remove impurities.

Conventional methods of treatment include filtering with or without the addition of chemicals. Used on their own, filters are often unsatisfactory, permitting microfine suspended matter and colour to pass through and the water remains cloudy. For many years a commonly used method of water treatment provides for the addition of aluminium sulphate to the water. Trivalent $AL^{+++}$ is very effective at flocculating negatively charged suspended particles and hence is useful for clearing turbid water. Most contaminants carry small negative electrical charges. The combined particles then group or cluster together into loose accumulations or flocs, which slowly settle to the bottom of the processing tank. After a period of time, the treated water is then taken from the tank and filtered, using sand filters, to remove the remaining flocculents. More chemicals are then added to the processed water to balance out the pH changes caused by the addition of alum.

Left behind in the tank is a gelatinous watery sludge containing the alum flocculent and contaminants. This sludge has to be removed before the next batch of water can be treated and the sludge finally disposed of.

As may readily be seen, this chemical method can be both expensive and hazardous to one's health, whilst requiring frequent maintenance of apparatus and sludge disposal.

Other water treatment apparatus exist in which an electric current is passed through the water by way of electrodes, however, these electrodes in the past have needed to be removed and cleaned.

Furthermore, the use of certain metals such as copper, silver and iron for the electrodes does work to remove some pollutants but further contaminates the water with the metal itself.

It is therefore an object of the present invention to provide a method and apparatus for treatment of such water, which will overcome or substantially remove the disadvantages of the prior art.

Accordingly, in one broad form, the present invention may be said to provide a method of treating water for the separation and removal of contaminants, said method comprising the steps of: introducing a quantity of untreated water into a container; passing DC of rectified AC electricity through the water by way of aluminium electrodes so as to treat the water causing at least some of the contaminants to rise; removing at least part of the water contaminants from the surface of the water; and removing at least part of the treated water.

This invention in its preferred form does not need the addition of chemicals or the use of filtration to provide crystal clear clean water. The present invention in its preferred form is more efficient and economical than other known methods.

Impure water is a conductor of electricity. In this invention, water is purified by a process of passing an electrical direct current or rectified alternating current through the water, polarizing some impurities and at the same time producing extremely small gas bubbles.

The small gas bubbles generated in this process quickly disperse throughout the water in the tank and act in a manner similar to positively charged particles, attracting the negatively charged contaminant particles, causing them to clump or group together, forming a floc. Although much contamination is heavier than water, in this process, most of the formation will readily float to the surface because of the gas content, with only a small proportion of the floc remaining in suspension after the electric current is removed, when it will either slowly float to the surface or settle to the bottom of the treatment tank.

It is preferred to remove the floating contaminated matter before removal of the treated water.

Preferably the current is set at a sufficient amperage to cause the treatment to be effective in from one to three hours.

It is also preferred that the electrodes are produced from aluminium.

The invention, in another broad form, can also be said to provide a water treatment apparatus comprising: a tank; a plurality of electrodes within said tank, wherein at least two electrodes or one electrode and said tank are connected to a DC or rectified AC electricity power supply, the remaining electrodes being insulated from one another; a water supply connected to the tank; a water outlet positioned to remove water from the tank; and means spaced from the bottom of the tank for removing deposits from the tank, wherein at least one of said electrodes in aluminium.

Preferably the apparatus includes means for removing contaminated matter floating to the surface during treatment of the water within the tank.

Preferably the voltage and current are adjustable so that the current may be set sufficient amperage to carry out the treatment of the water in approximately one to three hours.

The means for removing contaminated matter floated to the surface of the water in the tank can be, in one preferred form, a weir-like lip at one upper extent of the tank, or two similar weir-like lips at opposite ends, being slightly below the remaining perimeter of the upper sides of the tank, or the tank can be set up with one end slightly lower than the other. The floating contaminated matter can be swept from the surface of the water, over either a lip, or lower end into a receptacle for disposal.

Alternatively one means, in another preferred form, can be a scoop or skimming device.

By way of example only, a preferred form of the present invention will now be described with reference to the accompanying drawings in which:

Fig. 1 is a schematic representation of a cross sectional view of an embodiment of the invention in which all of the electrodes are connected to a power supply; and

Fig. 2 is another schematic representation, but of simpler embodiment, wherein the tank is of metal construction and acts as one of the electrodes; and

Fig. 3 is a schematic representation of a longitudinal sectional view of an embodiment of the invention and illustrating the collection of the contaminants removed from the water being treated.

Fig. 4 is a perspective view of an assembled water treatment tank showing nine electrodes.

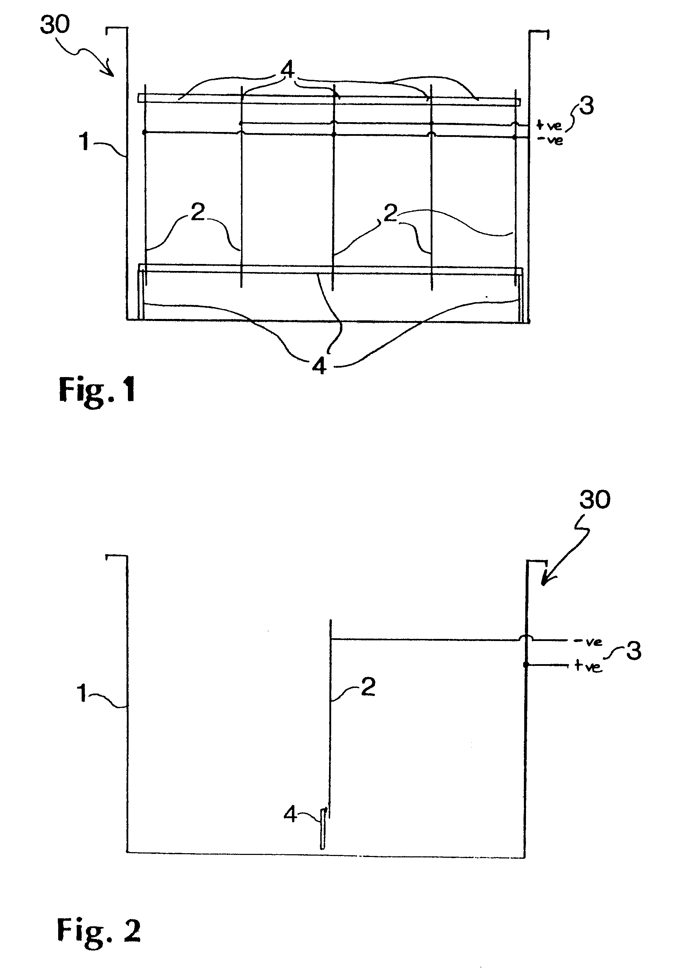

Fig. 1 shows a water treatment apparatus 30 comprising a tank 1 in which are assembled a number of electrodes 2. The electrodes 2 are adapted to be alternatively positive and negative and are provided with respective interconnections 3 for connection to a suitable power supply (not shown). The electrodes 2 are positioned within the tank 1 and insulated from the tank and from one another, using insulating supports 4.

Fig. 2 shows a simpler embodiment in which the tank 1 forms one of the electrodes and a second electrode 2 is positioned in the centre of the tank 1 and insulated therefrom. With this embodiment the tank may be square or rectangular or may be an upright cylinder with the electrode 2 being a pipe or similar linear electrode.

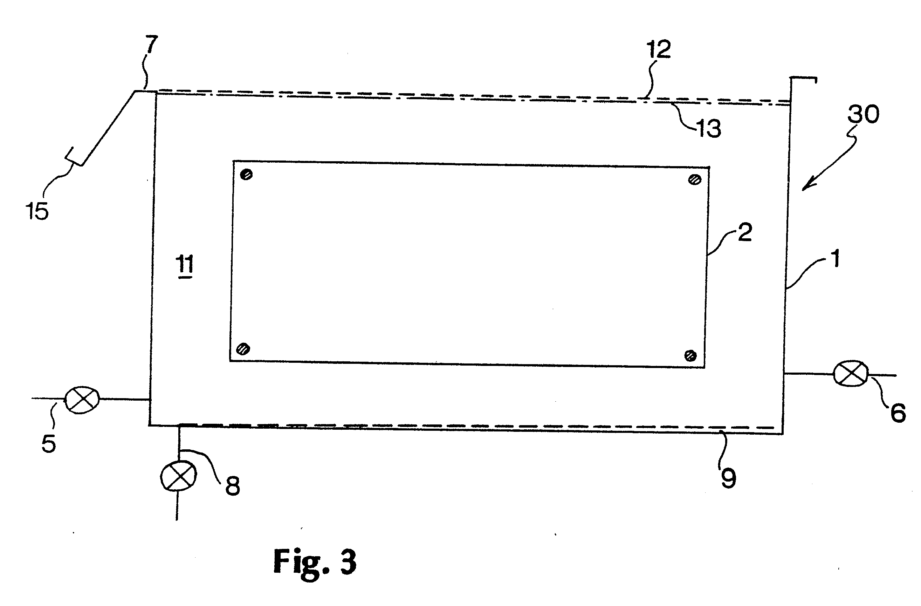

In Fig. 3 the tank 1 is supplied with a water inlet 5, clean water outlet 6, deposit outlet 8, a weir 7 and a spouting 15. The tank 1 may be tilted very slightly so that the lowest point is at the deposit outlet 8. The locations of the various inlets and outlets 5 to 8 may be selected according to convenience, provided the outlet 6 is approximately 10 cm above the bottom of the tank and the outlet 8 is in the bottom of the tank and the inlet 5 is placed low as practicable in either end or either side of the tank. The purpose of placing the outlet 8 at the lowest point is for ease of drainage and occasional flushing of the tank 1 when necessary.

The purpose of placing inlet 5 as low as practicable, but in an end or side of the tank 1, is so that the incoming water will disturb and mix with any remaining sediment from the last previous treatment. The purpose of placing the outlet 6 at approximately 10 cm above the bottom of the tank is so that processed clean water can be removed from the tank 1 without disturbing any remaining sedimentary deposits on the bottom. The weir 7 has a function which will be elaborated on hereinbelow but is essentially a low point around the upper perimeter of the tank 1 facilitating the removal of floating debris from the tank 1. The spout 15 is for directing the removed material into a receptacle (not shown) for disposal.

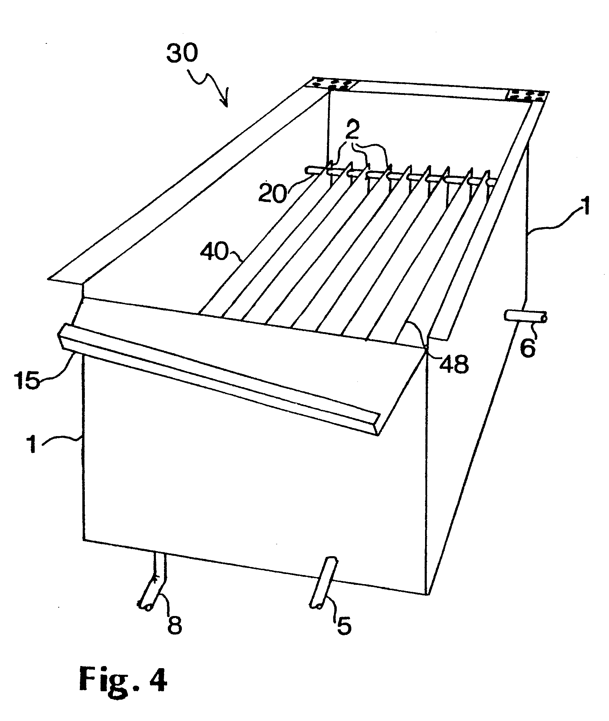

In Fig. 4 is can be seen that there are nine electrodes 2 in all. In this embodiment the electrodes 2 are suspended on an insulated rod 20 which is attached to the tank 1 by either a removable or fixed fitting. In this way, the electrode assembly can be arranged externally of the tank 1 and placed within the tank 1 in an insulated manner.

In Fig. 4, the nine electrodes 2 may be connected with alternate negative and positive polarities. Alternatively, and preferably, the electrodes 2 are connected so that the outer electrode plate 40 is connected to one polarity and the other outer electrode plate 48 is connected to the other polarity, with the remaining plates insulated and not connected to either polarity. In this configuration, because of the conductivity of the water, the intermediate insulated plates will each take up a voltage proportionate between the potential difference of the two outer plates and therefore all plates become activated. This method allows for the use of higher voltages and lower currents for a given amount of work, having a considerable advantage in larger installations.

The number, size and spacing of electrode plates may be varied in order to obtain the most convenient or most efficient operational conditions.

In operation water to be treated enters through the valve 5 and the tank 1 is filled to the maximum level 13. The electrodes are then connected or switched on to a DC or rectified AC power supply.

The power supply is typically capable of delivering a voltage in the region of say 4 to 40 volts at a current rating depending on the size of the apparatus. Higher voltages may be used in larger installations when adequate safety precautions are observed. For a 12 volt power supply and a domestic sized rectangular tank approximately 1.2 meters (long) x 0,75 meters (wide) x 0.8 meters (high) and five aluminium electrode plates each 0.8 meters (long) x 0.6 meters (deep) connected to alternate polarities a typical preferred current will be 12 to 15 amps.

Preferably the power source will supply 12 to 24 volts direct current or rectified alternating current, with a switch in the circuit. However, voltages and currents are not critical. For very large installations higher voltages offer advantages because of lower currents being necessary to de comparable work.

If water of relatively low conductivity is being processed, it may be necessary to increase the number of plates 2 and reduce spacing between then and/or increase voltage in order to maintain a satisfactory processing time of from one to three hours. When the tank body 1 is made of aluminium it may be connected to the positive polarity to further increase current.

When the tank 1 is made of conducting material and the tank body 1 is connected to one pole of the supply, any number of electrodes 2 will suffice. With the tank 1 insulated from the supply, or when a tank 1 is made of PVC, plastic, fiberglass or other non-conducting material, it is necessary to provide a minimum of two electrodes 2 of opposite polarity, but any higher number of electrodes can be used.

More electrodes 2 and/or closer spacing will increase the amount of current for a specified voltage, or alternatively a lower voltage can be used to maintain a specified current flow. A desirable voltage range of between 4 and 24 is employed for a domestic size tank of approximately 150 imperial or 180 US gallons or 640 litres capacity. Higher voltages are not recommended in domestic installations for safety reasons.

Typically, the power is applied for a period of approximately one hour or longer, however, the time is not critical. Higher currents permit shorter processing times. The minimum satisfactory time taken will depend to an extent upon the voltage and current used and the initial state of the water.

Fig. 3 shows the process as time progresses with a dense material of coagulated contaminant deposits forming in a layer 12 on top of the water, which is a combination of fine gas bubbles and most of the contaminants including heavy contaminants. This layer 12 is formed by the action of extremely small gas bubbles attracting the contaminants and forming a floc, then floating to the surface because of gas content. A light fluffy or woolly looking thin layer 9 will settle to the bottom of the tank, but this layer usually occurs after the removal of the power source and some of the suspended floc has had time to settle.

The floating layer 12 will contain most of the contaminants and can be removed by sweeping it over the lower lip 7 into the spouting 15 and disposed of. For a domestic size tank the removal can be achieved by the use of a batten fitted with a length of rubber insertion material of a length equal to the width of the tank 1 and sweeping the layer 12 over the lower lip 7 into the spouting 15 to a container (not shown) for disposal. Alternatively, a scoop may be used for removal of this layer 12, in which case the scoop should be made of a plastic or insulating material. For typical contaminated river water of farm dam water, the amount of removed material for disposal is approximately one percent of the tank capacity.

When adequate treatment of the water is completed, the power source is switched off and the layer 12 of contaminated material is swept off or otherwise removed. The activity within the tank will continue for some time after the current is removed, because of the charge held in the electrode plates. In a typical operation, after one or two hours, the time not being critical, a further sweeping of a light layer from the surface of the water is advisable but not essential for best results.

Preferably the treated water 11 within the tank 1 is then allowed to settle for several hours or overnight, after which the clean processed water 11 can be removed through the controlled outlet 6.

Because the controlled outlet 6 is positioned some distance above the bottom of the tank, the light layer 9 of settled material is not disturbed when the processed water 11 is removed or pumped out.

After removal of the processed water 11, a new lot of water for treatment is introduced into the tank 1 through the controlled inlet 5, which will stir up the settled light layer 9, mixing it into the incoming water and the process is repeated.

The tank 1 does not need to be cleaned or flushed out until after very many cycles, because the residue from one treatment cycle is mixed with the incoming water and most of it goes out with the sweeping of layer 12 on the next cycle.

If it is desired to clean out the tank 1, it is only necessary to open the controlled outlet 8 until the remaining water is drained away and then hose out the tank and electrode plates with preferably clean water.

It is preferred that all the electrodes 2 are produced from sheet aluminium of 1.5 mm or heavier gauge, however the electrodes may be in the form of sheets, plates, rods, tubes, mesh or net, the number varied and additional electrodes made of other materials such as carbon. The surface area of the electrodes 2, spacing, voltage and the conductivity of the water all contribute when determining the amount of current in the circuit. In fact, with well worn aluminium electrodes, the pitting on the surface of the electrode acts so as to effectively increase the surface area leading to increased performance.

The tank 1 may be made of conducting material, preferably aluminium. Alternatively the tank 1 may be made of non-conducting material such as fibreglass, PVC or other. Tank 1 shape is unimportant other than that a square or rectangular tank is easier for removal of the floating contaminants.

When the tank 1 is made of aluminium, it may be either connected to the positive polarity or be fully insulated from the power source.

If the tank 1 is connected to the negative polarity, it will function normally, but the tank inner surface will deteriorate over a lengthy period of time. When the tank 1 is made of conductive material but insulated from the power source and electrodes, the tank 1 will take up a potential somewhere between the negative and positive voltages of the electrodes.

Because of the characteristic of the system described in the last preceding paragraph, metallic tanks of some materials are unsatisfactory for extended use, for example, galvanised iron, because the galvanising will deteriorate rapidly. Tanks made of plastic materials are preferable to metal tanks, with the exception of aluminium.

For most operations the electric current is not critical. For a 12 to 14 volt power source the range is preferred between half to one milliampere per square centimeter of electrode area of 15 to 40 milliamperes per litre of water capacity of the treatment tank. The preferred range of milliwatts per litre is 200 to 500 milliwatts. Large departures from these parameters will work satisfactorily, but with lower energy rates times will be extended.

If water of slightly reduced quality is acceptable, then processing time can be considerably reduced by increasing currents and decreasing settlement time.

The size of treatment tanks can be anywhere from very small units suitable for travellers to carry and operate from flashlight cells or small portable units for campers to operate from automobile batteries, up to the largest installations suitable for city water supplies.

## Claims

1. A method of treating water for the separation and removal of contaminants, said method comprising the steps of:

introducing a quantity of untreated water into a container;

passing DC or rectified AC electricity through the water by way of aluminium electrodes so as to treat the water by causing at least some of the contaminants to rise;

removing at least part of the water contaminants from the surface of the water; and

removing at least part of the treated water.

2. The method according to Claim 1 wherein the voltage supply is within the range of 4 to 40 volts.

3. The method according to either Claim 1 or 2 wherein the electrodes are at least partially submerged.

4. The method according to any one of the preceding claims wherein the floated contaminants are removed before the treated water is removed.

5. The method according to Claim 4 wherein the floated contaminants are removed by way of a batten or scoop.

6. A water treatment apparatus comprising:

a tank;

a plurality of electrodes within said tank, wherein at least two electrodes or one electrode and said tank are connected to a DC or rectified AC electricity power supply, the remaining electrodes being insulated from one another;

a water supply connected to the tank;

a water outlet positioned to remove water from the tank; and means spaced from the bottom of the tank for removing deposits from the tank, wherein at least one of said electrodes is aluminium.

7. The apparatus according to Claim 6 wherein the removal means comprises a weir-like lip.

8. The apparatus according to Claim 6 or 7 wherein the removal means comprises a batten or scoop or skimming device.

9. The apparatus according to Claims 6 to 8 wherein the tank is one of the electrodes.

10. The apparatus according to any one of Claims 6 to 8 wherein the tank is made of fibreglass, plastic or other non-conducting material.

11. The apparatus according to any one of Claims 6 to 9 wherein the tank is made of aluminium, stainless steel or other conducting material.

12. The apparatus according to any one of Claims 6 to 11 wherein the electrodes can be plates, rods, tubes or mesh.

13. A method of treating water substantially as hereinbefore described with reference to the accompanying drawings.

14. A water treatment apparatus substantially as hereinbefore described with reference to the accompanying drawings.

30

4

1

2 2

+ve
-ve 3

4

**Fig. 1**

30

1

2

-ve
3
+ve

4

**Fig. 2**

0231100

Fig. 3

**Fig. 4**